# EUROPEAN PATENT SPECIFICATION

(11) **EP 3 939 786 B1**
(45) Date of publication and mention of the grant of the patent: **17.01.2024**
(21) Application number: 20773864.2
(22) Date of filing: 11.03.2020
(51) Int. Cl.: B32B 7/023, B32B 7/12, B32B 27/08, B32B 27/20, B32B 27/36

(54) **DECORATIVE SHEET**
DEKORATIVE FOLIE
FEUILLE DÉCORATIVE

(30) Priority: 15.03.2019 JP 2019048636
(43) Date of publication of application: 19.01.2022
(73) Proprietor: C.I. TAKIRON Corporation, Kita-Ku Osaka-Shi Osaka 530-0001 (JP)
(72) Inventor: KANEKO, Jun, Osaka-shi, Osaka 530-0001 (JP)
(74) Representative: De Vries & Metman
(86) International application number: PCT/JP2020/010443
(87) International publication number: WO 2020/189431

(56) References cited:
- WO-A1-2020/004318
- JP-A- H11 268 215
- JP-A- 2000 108 485
- JP-A- 2000 108 485
- JP-A- 2001 122 988
- JP-A- 2004 231 805
- JP-A- 2018 062 105
- JP-A- 2019 001 129

## Description

### [Technical Field]

The present invention relates to a decorative sheet.

### [Background Art]

In the past, polyvinyl chloride sheets were the mainstream as decorative sheets used for the surface layers of wall materials, floor materials, fixtures (doors, swing doors or the like), furniture, sink stands, vanities or the like. In recent years, due to growing interest in environmental issues such as preventing the generation of dioxin during incineration, the sheets mainly based on the polyolefin such as the polyethylene or the like that do not contain chlorine and the sheets mainly based on the polyester such as the polyethylene terephthalate (hereinafter, also referred to as "PET") or the like become the mainstream.

Also, from the viewpoint of promoting recycling, there is a strong demand for the development of decorative sheets using recycled resin raw materials made from the waste plastic. For example, Patent Document 1 discloses a decorative sheet containing a recycled polyester resin and a virgin polyester resin. Patent Document 2 discloses a decorative sheet comprising, in sequence, a transparent resin layer (13), a pattern layer (12) and a coloured resin layer (11). Both the transparent and the base layers comprise polyester.

### [Citation List]

### [Patent Document]

Patent Document 1: Japanese Unexamined Patent Application, First Publication No. H11-13C 877.
Patent Document 2: JP 2004 231805 A

### [Summary of Invention]

### [Technical Problem]

The recycled resin raw materials, such as mechanically recycled raw materials from the waste PET bottles are widely used for the purposes of manufacturing miscellaneous goods, labels, containers, packing materials, and clear files. However, due to the characteristic of the waste PET bottles, it is difficult to avoid the exogenous materials such as paper, glass, colorants, and olefin resins form being mixed therein. In addition, since the discoloration occurs due to the heat history during the process of regeneration, the chips and the pellets are already colored at the stage of being molded. Accordingly, there is a problem that the color tone of the production rods of the recycled resin raw material varies, and it is difficult to clearly express the color and the pattern of the decorative sheet using the recycled resin raw material.

The present invention has been made in view of the above-mentioned circumstances, and a purpose of the present invention is to provide a decorative sheet having a pattern layer with an arbitrary pattern, and even if a recycled resin raw material is used, the color tone unevenness is small and the pattern layer is clearly formed.

### [Advantageous Effects of Invention]

According to the present invention, it is possible to provide a decorative sheet having a pattern layer with an arbitrary pattern, and even if a recycled resin raw material is used, the color tone unevenness is small and the pattern layer is clearly formed.

### [Brief Description of Drawings]

Fig. 1 is a cross-sectional view showing a layer structure of a decorative sheet according to an embodiment of the present invention.
Fig. 2 is a cross-sectional view showing a layer structure of a decorative sheet according to another embodiment of the present invention.

### [Description of Embodiments]

The definitions of the following terms apply throughout the present specification and enclosed claims.

"L*" is a correlation amount of lightness defined in JIS Z 8781-4: 2013 "Color measurement-Part 4: CIE 1976 "L*a*b* color space" (corresponding to the international standard ISO 11664-4: 2008).

"a*" and "b*" are color coordinates defined in JIS Z 8781-4: 2013 "Color measurement-Part 4: CIE 1976 L*a*b* color space" (corresponding to the international standard ISO 11664-4: 2008).

The numeral sign"~" indicates a numerical range means that the numerical values described therebefore and thereafter are the lower limit value and the upper limit value of the numerical range.

Hereinafter, a decorative sheet according to an embodiment of the present invention will be described.

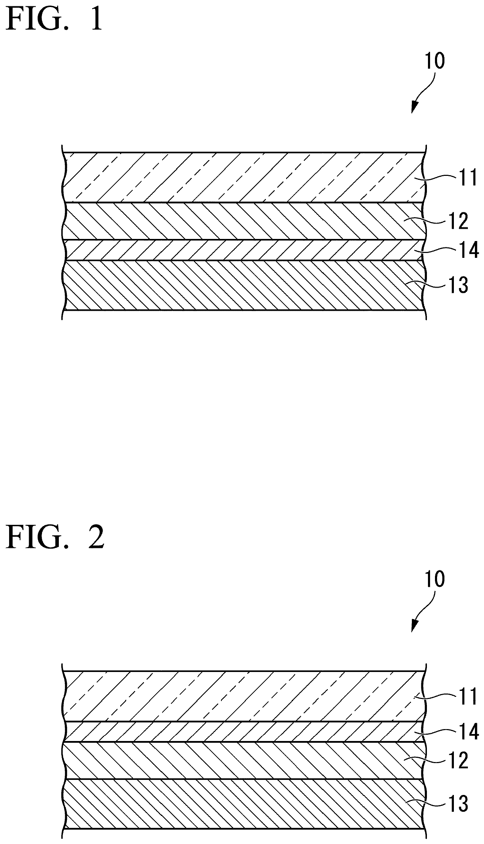

FIG. 1 is a cross-sectional view showing a layer structure of a decorative sheet according to an embodiment of the present invention.

A decorative sheet 10 according to the present embodiment is formed by sequentially superimposing a transparent recycled resin layer 11 containing a recycled PET resin, a pattern layer 12 having an arbitrary pattern, and a colored recycled resin layer 13 containing the recycled PET resin and being colored in an arbitrary color tone. Also, according to the present embodiment, an adhesive layer 14 is further formed between the pattern layer 12 and the colored recycled resin layer 13. The pattern layer 12 can also be used as the adhesive layer.

### (Transparent recycled resin layer)

The transparent recycled resin layer 11 has a haze value as the degree of cloudiness which is equal to or less than 4%. The haze value is a value indicated by T1/T2×100 and used as an index of transparency, wherein the numerical T1 indicates the transmittance of all the positively transmitted light and the diffused transmitted light transmitted through the resin layer as a measurement target, and the numerical to be measured, and the numerical T2 indicates the transmittance of the diffused light obtained by removing the positively transmitted light transmitted through the resin layer as the measurement target using a light trap. When the decorative sheet 10 is observed from the transparent recycled resin layer 11 having the haze value equal to or less than 4%, the pattern applied to the pattern layer 12 which is the lower layer can be clearly seen without fogging.

Further, the transparent recycled resin layer 11 has an L* value equal to or more than 98.5 and a b* value equal to or less than 1.8 which are measured with a color measuring plate having L*: 99.17, a*: -0.09, and b*: 0.53 in the CIE 1976 Lab as the background. As a result, there is almost no coloration in the transparent recycled resin layer 11, and it is possible to clearly visually recognize the pattern applied to the lower pattern layer 12 as the lower layer without any change in the color tone. The L* and b* of the transparent recycled resin layer 11 are measured by the test method described in JIS K 7390: 2003.

The transparent recycled resin layer 11 is formed to have a thickness, for example, in a range of 12µm~150µm, and more preferably in a range of 25µm~125µm. A primer layer or a hard coat layer may be further formed on the surface of the transparent recycled resin layer 11.

The recycled polyester resin configuring the transparent recycled resin layer 11 is a recycled resin containing the PET bottle as a raw material, and the transparent recycled resin layer 11 contains the recycled polyester resin in a range equal to or more than 50% by mass and equal to or less than 95% by mass, more preferably in a range equal to or more than 70% by mass and equal to or less than 85%. The remaining resin component excluding the recycled polyester resin may be a newly produced virgin polyester resin.

In a case in which the amount of the recycled polyester resin contained in the transparent recycled resin layer 11 is less than 50% by mass, the proportion of the virgin polyester resin becomes relatively large, and the significance of using the recycled polyester resin as an environmental measure decreases. Also, in a case in which the amount of the recycled polyester resin contained in the transparent recycled resin layer 11 exceeds 95% by mass, there is a concern that the transparency may decrease.

By increasing the content ratio of the recycled polyester resin in the transparent recycled resin layer 11 in this way, it is possible to further promote the use of the recycled polyester resin as an environmental measure, and realize the environmentally friendly decorative sheet 10.

The recycled polyester resin used in the transparent recycled resin layer 11 and the colored recycled resin layer 13 described later according to the present embodiment is the recycled resin derived from the PET bottles, and in particular, it is preferable to use the mechanically recycled raw materials of the waste PET bottles wherein a mature recycling recovery process thereof is established.

From the viewpoint of being inexpensive and easily achieved, it is possible to use the crushed materials of the pet bottles. The recycled polyester resin may contain the crushed materials such as a label (including printing, adhesive or the like) and a cap attached to the PET bottles as long as the effect of the present invention is not impaired.

For example, in Japan, in order to prevent quality deterioration of recycled products, the standalone PET (substances other than the PET main material are not added or combined) without being colored (excluding the white color due to crystallization of the spout) is defined as the designated PET bottles according to the voluntary design guidelines described below. Accordingly, at present, the colored PET bottles are not manufactured in Japan, and it is requested to change colored PET bottles produced overseas for Japan to non-colored PET bottles (http://www.petbottle-rec.gr.jp/qanda/sec13.html).

Details of the PET bottles distributed in Japan are specified according to the "Voluntary Design Guidelines for Designated PET Bottles" established by the Council for PET Bottle Recycling under the guidance of the government (http://www.petbottle-rec.gr.jp/guideline/jisyu.html).

Such voluntary design guidelines are stipulated by the Council for PET Bottle Recycling for bottles, labels (including printing, adhesives and the like), caps, and the like in order to use the designated labeled products (soft drinks, dairy drinks, alcoholic beverages, and specific seasonings) stipulated in the Law for Promotion of Effective Utilization of Resources to manufacture the containers having superior reusability including reprocessing and hygiene after being used.

It is obvious that members (organizations and companies) of the Council for PET Bottle Recycling comply with the voluntary design guidelines, and it is necessary for others as non-members to comply with the voluntary design guidelines in a case of manufacturing, importing, and selling beverages, alcoholic beverages, and specific seasonings filled in designated PET bottles, and alternatively in a case of manufacturing and importing the designated PET bottles and attached packaging materials that are sold or used in Japan.

Therefore, most PET bottles distributed in Japan are uncolored, and the recycled polyester resin derived from PET bottles is almost transparent.

Although the recycled polyester resin is almost transparent, there is a tendency that the recycled polyester resin is in the yellow-black (with a high b* value and a low L* value in CIE 1976 L*a*b* color space) due to the heat history received during thermoforming and the mixture of labels and the like. Therefore, it is also preferable to select the recycled polyester resin with a low b* value and a high L* value to be used for the transparent recycled resin layer 11.

It is preferable that the recycled polyester resin has a crystallization temperature equal to or less than 145 degrees Celsius, and more preferably in a range of 120 degrees Celsius to 145 degrees Celsius.

The crystallization temperature of the recycled polyester resin is measured using a thermal analyzer (differential scanning calorimetry, DSC or the like).

The recycled polyester resin preferably has an intrinsic viscosity (IV value), for example, equal to or more than 0.60, more preferably in a range of 0.65-0.85, and further preferably in a range of 0.70-0.83. If the intrinsic viscosity (IV value) of the recycled polyester resin is less than the lower limit of the above described range, the viscosity may be too low and a problem may occur in extrusion moldability. If the intrinsic viscosity (IV value) of the recycled polyester resin exceeds the upper limit of the above described range, the viscosity may be too high and a problem may occur in the extrusion moldability.

The intrinsic viscosity (IV value) of the recycled polyester resin is measured by the test method described in JIS K 7390: 2003.

The transparent recycled resin layer 11 may further include other components such as a compatibilizer, an ultraviolet absorber, a light stabilizer, an antioxidant, an antistatic agent, a storage stabilizer, a lubricant, and a filler as long as the transparency is not lowered.

### (Pattern layer)

The pattern layer 12 is a resin layer on which an arbitrary pattern is formed, and the L* value is equal to or more than 95.0 and less than 97.0, and the b* value is equal to or more than 3.0 in CIE 1976 Lab, or The L* value is less than 95.0 in CIE 1976 Lab.

In this way, the pattern layer 12 can display an arbitrary pattern.

Further, it is preferable to keep a difference between the L* value of the transparent recycled resin layer 11 and the L* value of the pattern layer 12 at equal to or more than 2.0. As a result, when the decorative sheet 10 is viewed from the transparent recycled resin layer 11, the pattern of the pattern layer 12 can be visually recognized more clearly.

The pattern layer 12 is formed to have a thickness, for example, in a range of 0.1pm~10pm, and more preferably in a range of 1µm~5µm.

The ink forming the pattern in the pattern layer 12 is not particularly limited, and for example, a colored ink composed of an acrylic resin and a binder containing a vinyl chloride-vinyl acetate copolymer as a main component can be used.

According to the present embodiment, the pattern layer 12 is a single layer, however, in addition to this configuration, the pattern layer can be formed in multiple layers having equal to or more than two layers. By forming the pattern layer in multiple layers, it is possible to form a complex and deep pattern.

Further, by including a material capable of heat sealing in the pattern layer 12, the pattern layer 12 can functions as the adhesive layer 14 for adhering the pattern layer 12 and the colored recycled resin layer 13.

### (Colored recycled resin layer)

The recycled polyester based resin configuring the colored recycled resin layer 13 is a recycled resin containing the PET bottle as the raw material as same as the transparent recycled resin layer 11, and the colored recycled resin layer 13 contains the recycled polyester resin equal to or more than 10% by mass and equal to or less than 100% by mass, and more preferably contains the recycled polyester resin in a range equal to or more than 70% by mass and equal to or less than 95% by mass. The remaining resin component excluding the recycled polyester resin may be a newly produced virgin polyester resin.

Further, the colored recycled resin layer 13 preferably contains one or more kinds of colored pigments. For example, examples of the white coloring pigment include the titanium oxide, the zinc oxide, the calcium carbonate, the magnesium oxide, and the lithobon. As the white coloring pigment, titanium oxide is preferable because it has a high covering ability. Examples of titanium oxide include the rutile-type titanium oxide and the anatase-type titanium oxide, and the rutile-type titanium oxide is preferable because of its low activity as a catalyst.

If the pattern layer 12 can cover the color blurring of the base material (for example, wood) forming the decorative sheet 10, the colored recycled resin layer 13 may not contain the coloring pigment.

The colored regenerated resin layer 13 is formed so as to have a thickness, for example, in a range of 50pm~300pm, and more preferably in a range of 100pm~250pm.

### (Adhesive layer)

According to the present embodiment, the adhesive layer 14 is a layer formed from an adhesive so as to adhere the pattern layer 12 and the colored recycled resin layer 13, and for example, an adhesive for dry lamination can be used. Examples of the adhesive for dry lamination include a polyester polyol/polycisocyanate based two-component mixed curing adhesive.

In addition to forming the adhesive layer 14 between the pattern layer 12 and the colored recycled resin layer 13 as shown in Fig. 1, the adhesive layer 14 can be formed between the transparent recycled resin layer 11 and the pattern layer 12 as shown in Fig. 2. Further, the adhesive layer 14 can be formed as a part of the pattern layer 12.

### (Decorative sheet)

The entire decorative sheet 10, that is, the recycled polyester resin contained in the transparent recycled resin layer 11 and the colored recycled resin layer 13 is formed to be equal to or more than 50% by mass. When the amount of the recycled polyester resin contained in the entire decorative sheet 10 is less than 50% by mass, the proportion of the virgin polyester resin becomes relatively large, and the significance of using the recycled polyester resin as an environmental measure decreases.

By increasing the content ratio of the recycled polyester resin in the entire decorative sheet 10, it is possible to further promote the use of the recycled polyester resin as an environmental measure, and realize the environmentally friendly decorative sheet 10.

Further, the entire decorative sheet 10 is formed to have the thickness, for example, in a range of 0.15mm-0.40mm, more preferably in a range of 0.20mm-0.35mm.

### (Mechanism of action)

In the decorative sheet 10 described above according to the present embodiment, the transparent recycled resin layer 11 and the colored recycled resin layer 13 contain the recycled polyester resin, such that the decorative sheet 10 is more environmentally friendly than the decorative sheet containing polyvinyl chloride and the decorative sheet with a low proportion of recycled resin with respect to all the resin components contained therein.

Then, with respect to the transparent recycled resin layer 11 in the decorative sheet 10 according to the present embodiment, the measured L* value in the CIE 1976 Lab is equal to or more than 98.5 and the b* value in the CIE 1976 Lab is equal to or less than 1.8 by using the color measuring plate L*: 99.17, a*: -0.09, b*: 0.53 as a background. Accordingly, the transparent recycled resin layer 11 is almost non-colored, and the pattern applied to the pattern layer 12 as the lower layer can be clearly visually recognized without any change in the color tone. Therefore, it is possible to realize the decorative sheet 10 in which high brightness is maintained in appearance and there is less unevenness in color tone.

Also, with respect to the pattern layer 12 in the decorative sheet 10 according to the present embodiment, the measured L* value in the CIE 1976 Lab is equal to or more than 95.0 and less than 97.0 while the b* value in the CIE 1976 Lab is equal to or more than 3.0, or the measured L* value in the CIE 1976 Lab is less than 95.0. As a result, the pattern layer 12 can be formed to realize the decorative sheet 10 in which an arbitrary pattern is clearly displayed.

The decorative sheet according to the present invention is used for the surface layer of wall materials, floor materials, fittings (doors, swing doors, etc.), furniture, sink stands, vanities, and the like, and preferably used for the surface layer of the swing doors of furniture, sink stands, vanities, and the like.

Although the embodiments of the present invention have been specifically described above, these embodiments are presented as examples and are not intended to limit the scope of the invention.

### [Examples]

Hereinafter, the present invention will be described in more detail with reference of examples; however, the present invention is not limited to these examples.

### (Haze measurement method for transparent resin layer)

The haze value was measured using a haze meter (manufactured by Nippon Denshoku Industries Co., Ltd.: NDH2000).

### (Color measurement method for transparent resin layer)

Three points of the decorative sheet placed on the white background mount were measured under the conditions of light source D65, viewing angle 10 degrees, and color measurement range ϕ28 mm using a spectrophotometer (CCM) (manufactured by Kurabo Industries Ltd.: COLOR-7) to obtain L*, a*, b* in the L*a*b* color space in CIE 1976, and the average values of the three locations were used. The color tone of the white background mount is L*: 99.17, a*: -0.09, b*: 0.53.

### (Evaluation method of pattern)

The Evaluation is performed visually by comparing with the decorative sheet formed only by the virgin polyester resin collected in Comparison Example 7 in which the recycled raw material ratio in the transparent recycled resin layer and the colored recycled resin layer was 0.0 wt%.

### (Material used)

### (1) Transparent recycled resin layer

A: A transparent film of Reshine (registered trademark) with a thickness of 0.05 mm manufactured by Toyobo Co., Ltd. was used (recycled polyester resin ratio is 80 wt%), wherein the haze value is 2.20%, b* value is 1.10, and L* value is 98.78.
B: A transparent film of Reshine (registered trademark) with a thickness of 0.125 mm manufactured by Toyobo Co., Ltd. was used (recycled polyester resin ratio is 80 wt%), wherein the haze value is 1.81%, b* value is 1.78, and L* value is 98.51.
C: A transparent film of Reshine (registered trademark) with a thickness of 0.188 mm manufactured by Toyobo Co., Ltd. was used (recycled polyester resin ratio is 80 wt%), wherein the haze value is 1.94%, b* value is 1.94, and L* value is 98.38.
D: A transparent film of Reshine (registered trademark) with a thickness of 0.125 mm manufactured by Toyobo Co., Ltd. was used (recycled polyester resin ratio is 60 wt%), wherein the haze value is 1.70%, b* value is 1.60, and L* value is 98.60.

*For A to D, easy-adhesion-treated products were used.

### (2) Colored Recycled Resin Layer

A resin mixture was prepared by adding a masterbatch (including the white pigment and virgin A-PET resin (CR8816, manufactured by Huajun).) to a recycled polyester resin (Al-impet manufactured by ALIPLAST, Italy). This recycled polyester resin mixture is molded using an extruder (OSE-35ϕmm extruder) manufactured by Osada Seisakusho Co., Ltd. at a temperature of 265 degrees Celsius and at a screw rotation speed of 44 rpm to obtain a colored recycled resin layer in the white color containing the recycled polyester resin (the width is 340 mm, the thickness is 0.100 mm or 0.200 mm) was obtained. Further, as the colored recycled resin layer, those having a recycled polyester resin ratio of 15 wt%, 50 wt%, and 85 wt% were prepared.

### (3) Adhesive layer (adhesive)

The Polyester polyol/Polycisocyanate based two-component curing type adhesive (main agent: Seikabond E-295NT 100 parts by weight, curing agent: Seikabond C-75N-1.5 10 parts by weight, solvent: ethyl acetate Zahn Cup #3, diluted for 19 seconds (solid content about 30%)) manufactured by Dainichiseika Kogyo Co., Ltd was used.

### (4) Pattern layer (pattern printing ink)

A colored ink composed of an acrylic resin and a binder containing a vinyl chloride-vinyl acetate copolymer as a main component was used.

### [Example 1]

A white based abstract pattern was printed in advance on the above-described (2) white colored sheet (colored recycled resin layer) having a recycled polyester resin ratio of 50 wt% and a thickness of 0.200 mm using the above-described (4) pattern printing ink. The printed sheet and the transparent film A according to the above-described (1) were adhered and superimposed using the adhesive according to the above-described (3) to manufacture a decorative sheet of Example 1. The average color measurement value at 5 locations was (L*96.51, a*0.18, b*5.53). Also, the adhesion was performed using the dry lamination with the comma coater as the adhesive by applying the comma coater on the transparent film A according to the above-described (1) at 10 g/m², then volatilizing the solvent of the adhesive in a drying furnace, and then adhering the pattern layer with a warm nip roll being heated to 50 degrees Celsius. Thereafter, the curing was performed at 35 degrees Celsius for 72 hours.

### [Example 2]

The procedures as same as Example 1 were performed except that the transparent film B according to the above-described (1) was used as the transparent recycled resin layer.

### [Example 3]

On the back surface of the transparent film A according to the above-described (1), a white abstract pattern was printed using the pattern printing ink in the above-described (4). The decorative sheet of Example 3 was manufactured by adhering and superimposing this to the white colored sheet (colored recycled resin layer) having the recycled resin ratio of 80 wt% and the thickness of 0.200 mm according to the above-described (2) using the adhesive according to the above-described (3). Also, the adhesion was performed using the dry lamination with the comma coater as the adhesive by applying the comma coater on the transparent film A according to the above-described (1) at 10 g/m², then volatilizing the solvent of the adhesive in a drying furnace, and then adhering the colored recycled resin layer with a warm nip roll being heated to 50 degrees Celsius. Thereafter, the curing was performed at 35 degrees Celsius for 72 hours.

### [Example 4]

The procedures as same as Example 3 were performed except that the transparent film B according to the above-described (1) was used as the transparent recycled resin layer.

### [Example 5]

The procedures as same as Example 4 were performed except that the white colored sheet having the recycled resin ratio of 80 wt% and the thickness of 0.200 mm was used as the colored recycled resin layer to change the pattern layer.

### [Example 6]

The procedures as same as Example 3 were performed except that the white colored sheet having the recycled resin ratio of 15 wt% and the thickness of 0.10 mm was used as the colored recycled resin layer.

### [Example 7]

The procedures as same as Example 3 were performed except that the transparent film D according to the above-described (1) was used as the colored recycled resin layer and the white colored sheet having the thickness of 0.10 mm was used as the colored recycled resin layer.

### [Comparison Example 1]

The procedures as same as Example 1 were performed except that the transparent film C according to the above-described (1) was used as the transparent recycled resin layer.

### [Comparison Example 2]

The procedures as same as Example 3 were performed except that the transparent film C according to the above-described (1) was used as the transparent recycled resin layer.

### [Comparison Example 3]

A biaxially stretched PET (S50 manufactured by Unitika Ltd.) using a virgin polyester resin with a thickness of 0.05 mm as the transparent recycled resin layer for determining the range of haze values was used to evaluate the pattern. Other configurations are the same as in the Example 1.
* Transparent film S50 manufactured by Unitika Ltd.: 0.05 mm thick transparent film (recycled polyester resin ratio 0 wt%), haze value 4.89%, b* value 1.02, L* value 98.77.

### [Comparison Example 4]

A biaxially stretched PET (SA100 manufactured by Unitika Ltd.) using a virgin polyester resin with a thickness of 0.10 mm as the transparent recycled resin layer for determining the range of haze values was used to evaluate the pattern. Other configurations are the same as in the Example 1.
* Transparent film SA100 manufactured by Unitika Ltd.: 0.10 mm thick transparent film (recycled polyester resin ratio 0 wt%), haze value 4.01%, b* value 1.22, L* value 98.70.

### [Comparison Example 5]

In the pattern layer, a pattern having a higher whiteness (average color measurement value at 5 locations: L*96.66, a*-0.63, b*2.05) than that in Example 1 was used as the printing pattern. Other configurations are the same as in the Example 1.

### [Comparison Example 6]

In the pattern layer, a pattern having a higher whiteness (average color measurement value at 5 locations: L*96.66, a*-0.63, b*2.05) than that in Example 3 was used as the printing pattern. Other configurations are the same as in the Example 3.

### [Comparison Example 7]

A white based abstract pattern using the pattern printing ink according to the above-described (4) was applied to a colored resin layer (having a thickness of 0.2 mm) having a virgin A-PET resin (manufactured by Huajun Co., Ltd., CR8816) as the main component and being obtained by an extrusion molding method. This colored resin layer with the pattern layer already formed and a biaxially stretched polyester film (Cosmo Shine (registered trademark) A4100) manufactured by Toyobo Co., Ltd. were adhered by the adhesive according to the above-described (3) to manufacture the decorative sheet of Comparison Example 7. Also, the adhesion was performed using the dry lamination with the comma coater as the adhesive by applying the comma coater on the colored resin layer with the pattern layer already formed at 10 g/m², then volatilizing the solvent of the adhesive in a drying furnace, and then adhering the colored recycled resin layer with a warm nip roll being heated to 50 degrees Celsius. Thereafter, the curing was performed at 35 degrees Celsius for 72 hours.
*Cosmo Shine (registered trademark) A4100 manufactured by Toyobo Co., Ltd.: 0.050 mm thick transparent film (recycled polyester resin ratio 0 wt%), haze value 1.00%, b* value 0.88, L* value 98.94.

Table 1 shows the composition and evaluation results of the samples according to Examples 1 to 7, and Table 2 shows the composition and evaluation results of the samples according to Comparison Examples 1 to 7, respectively. In addition, Table 2 also shows an example of an actual design product (actual design) according to the present invention. In Table 1 and Table 2, the evaluations of the Examples, Comparison Examples, and Reference Examples were determined that the sample is acceptable only if all of items shown as follows: (a) sharpness of pattern, (b) tint of pattern, (c) difference between L* value of transparent resin layer and L* value of pattern layer, and (d) weight ratio of recycled polyester resin, satisfy the conditions shown as follows: (a) Vivid, (b) No abnormality, (c) Equal to or more than 2.00, and (d) Equal to or more than 50 wt%. Other samples were unacceptable.

**[Table 1]**

| | | | | EXAMPLE 1 | EXAMPLE 2 | EXAMPLE 3 | EXAMPLE 4 | EXAMPLE 5 | EXAMPLE 6 | EXAMPLE 7 |
|---|---|---|---|---|---|---|---|---|---|---|
| TRANSPARENT RECYCLED RESIN LAYER | (1) THICKNESS | | | 0. 05mm | 0. 125mm | 0. 05mm | 0. 125mm | 0. 125mm | 0. 125mm | 0. 125mm |
| | (2) RECYCLED RAW MATERIAL RATIO | | | 80. 0wt% | 80. 0wt% | 80. 0wt% | 80. 0wt% | 80. 0wt% | 80. 0wt% | 60. Owt% |
| | (3) HAZE | | | 2. 20% | 1. 81% | 2. 20% | 1.81% | 1. 81% | 1.81% | 1. 70% |
| | (4)YELLOW<b VALUE> | | | 1. 10 | 1.78 | 1. 10 | 1. 78 | 1.78 | 1. 78 | 1.60 |
| | (5)LIGHTNESS<L VALUE> | | | 98. 78 | 98. 51 | 98. 78 | 98.51 | 98.51 | 98.51 | 98. 60 |
| DESIGN LAYER | (6)PRINTING BASE MATERIAL | | | COLORING SIDE | COLORING SIDE | TRANSPARENT SIDE | TRANSPARENT SIDE | TRANSPARENT SIDE | TRANSPARENT SIDE | TRANSPARENT SIDE |
| | (7)PRINTING DESIGN | | | WHITE 1 | WHITE 1 | WHITE 1 | WHITE 1 | WHITE 2 | WHITE 1 | WHITE 1 |
| | | L* VALUE (AVERAGE VALUE AT 5 LOCATIONS) | | 96.51 | 96. 51 | 96. 51 | 96. 51 | 89. 14 | 96.51 | 96.51 |
| | | a* VALUE (AVERAGE VALUE AT 5 LOCATIONS) | | -0.18 | -0. 18 | -0.18 | -0. 18 | 0.15 | -0.18 | -0.18 |
| | | b* VALUE (AVERAGE VALUE AT 5 LOCATIONS) | | 5. 53 | 5.53 | 5. 53 | 5. 53 | 6. 70 | 5. 53 | 5. 53 |
| COLORED RECYCLED RESIN LAYER | (8)THICKNESS OF COLORED RECYCLED RESIN LAYER | | | 0. 20mm | 0. 20mm | 0. 20mm | 0. 20mm | 0. 20mm | 0. 10mm | 0. 10mm |
| | (9)RECYCLED RAW MATERIAL RATIO OF COLORED RECYCLED RESIN LAYER | | | 50. 0wt% | 50. 0wt% | 50. 0wt% | 50. 0wt% | 85. 0wt% | 15. 0wt% | 50. 0wt% |
| PERFORMANCE | (10)SHARPNESS OF DESIGN | | | VIVID | VIVID | VIVID | VIVID | VIVID | VIVID | VIVID |
| | (11)TINT OF DESIGN | | | NO ABNORMALITY | NO ABNORMALITY | NO ABNORMALITY | NO ABNORMALITY | NO ABNORMALITY | NO ABNORMALITY | NO ABNORMALITY |
| | | | DIFFERENCE BETWEEN L* VALUE OF TRANSPARENT RESIN LAYER AND L* VALUE OF DESIGN LAYER | 2. 27 | 2. 00 | 2. 27 | 2. 00 | 9.37 | 2. 00 | 2. 09 |
| | (12)WEIGHT RATIO OF RECYCLED RESIN WITH RESPECT TO WHOLE RESIN | | | 56. 0wt% | 61. 5wt% | 56. 0wt% | 61. 5wt% | 83. 1wt% | 51. 1wt% | 55. 6wt% |
| EVALUATION | (13) ENVIRONMENTALLY-FRIENDLY DECORAT IVE SHEET WITH DESIGN DECORATION | | | ACCEPTABLE | ACCEPTABLE | ACCEPTABLE | ACCEPTABLE | ACCEPTABLE | ACCEPTABLE | ACCEPTABLE |

**[Table 2]**

| | | | | COMPARISON EXAMPLE 1 | COMPARISON EXAMPLE 2 | COMPARISON EXAMPLE 3 | COMPARISON EXAMPLE 4 | COMPARISON EXAMPLE 5 | COMPARISON EXAMPLE 6 | COMPARISON EXAMPLE 7 |
|---|---|---|---|---|---|---|---|---|---|---|
| TRANSPARENT RECYCLED RESIN LAYER | (1) TH I CKNESS | | | 0. 188mm | 0. 188mm | 0. 050mm | 0. 100mm | 0. 05mm | 0. 05mm | 0. 05mm |
| | (2) RECYCLED RAW MATERIAL RATIO | | | 80. 0wt% | 80. 0wt% | 0. 0wt% | O. 0wt% | 80. 0wt% | 80. 0wt% | 0. 0wt% |
| | (3) HAZE | | | 1.94% | 1.94% | 4. 89% | 4.01% | 2. 20% | 2. 20% | 1. 00% |
| | (4)YELLOW<b VALUE> | | | 1.94 | 1.94 | 1. 02 | 1.22 | 1. 10 | 1. 10 | 0. 88 |
| | (5) LIGHTNESS<L VALUE> | | | 98. 38 | 98. 38 | 98. 77 | 98. 70 | 98. 78 | 98. 78 | 98. 94 |
| DESIGN LAYER | (6)PRINTING BASE MATERIAL | | | COLORING SIDE | TRANSPARENT SIDE | COLORING SIDE | COLORING SIDE | COLORING SIDE | TRANSPARENT SIDE | COLORING SIDE |
| | (7) PRINTING DESIGN | | | WHITE 1 | WHITE 1 | WHITE 1 | WHITE 1 | WHITE 3 | WHITE 3 | WHITE 1 |
| | | L* VALUE (AVERAGE VALUE AT 5 LOCATIONS) | | 96.51 | 96.51 | 96. 51 | 96. 51 | 96. 66 | 96. 66 | 96.51 |
| | | a* VALUE (AVERAGE VALUE AT 5 LOCATIONS) | | -0. 18 | -0. 18 | -0. 18 | -0. 18 | -0. 63 | -0. 63 | -0. 18 |
| | | b* VALUE (AVERAGE VALUE AT 5 LOCATIONS) | | 5.53 | 5.53 | 5. 53 | 5. 53 | 2. 05 | 2. 05 | 5. 53 |
| COLORED RECYCLED RESIN LAYER | (8)THICKNESS OF COLORED RECYCLED RESIN LAYER | | | 0. 20mm | 0. 20mm | 0. 20mm | O. 20mm | O. 20mm | 0. 20mm | 0. 20mm |
| | (9)RECYCLED RAW MATERIAL RATIO OF COLORED RECYCLED RESIN LAYER | | | 50. 0wt% | 50. 0wt% | 50. 0wt% | 50. 0wt% | 50. 0wt% | 50. 0wt% | 0. 0wt% |
| PERFORMANCE | (10)SHARPNESS OF DESIGN | | | VIVID | VIVID | DULL | DULL (LIMITATION) | DULL | DULL | VIVID |
| | (11)TINT OF DESIGN | | | YELLOWISH | YELLOWISH | NO ABNORMALITY | NO ABNORMALITY | YELLOWISH | YELLOWISH | NO ABNORMALITY |
| | | | DIFFERENCE BETWEEN L* VALUE OF TRANSPARENT RESIN LAYER AND L* VALUE OF DESIGN LAYER | 1.87 | 1.87 | 2. 26 | 2. 19 | 2. 12 | 2. 12 | 2.43 |
| | (12)WEIGHT RATIO OF RECYCLED RESIN WITH RESPECT TO WHOLE RESIN | | | 64. 5wt% | 64. 5wt% | 40. 0wt% | 33. 3wt% | 56. 0wt% | 56. 0wt% | 0. 0wt% |
| EVALUATION | (13)ENVIRONMENTALLY-FRIENDLY DECORATIVE SHEET WITH DESIGN DECORATION | | | UNACCEPTABLE | UNACCEPTABLE | UNACCEPTABLE | UNACCEPTABLE | UNACCEPTABLE | UNACCEPTABLE | UNACCEPTABLE |

Each of the decorative sheets of Examples 1 to 7 had a vivid pattern and there is none of discoloration such as dullness or yellowing of the pattern, and had a better aesthetic appearance than Comparison Examples 1 to 7. In addition, by containing a large amount of recycled polyester resin, the polyester resin is excellent in terms of recycling utilization, and an environmentally friendly decorative sheet had been realized.

On the other hand, the decorative sheets of Comparison Examples 1 to 7 were inferior in aesthetic appearance to Examples 1 to 7 since the color of the pattern was dull and discoloration such as yellowing occurred. Further, the samples of Comparison Examples 3 and 4 had a low content ratio of the recycled polyester resin, and thus the samples were inferior to Examples 1 to 5 in terms of recycling utilization of the polyester resin.

### [Industrial Applicability]

The decorative sheet of the present invention is useful as a decorative sheet that is environmentally friendly and the decorative sheet can clearly express a pattern.

### [Reference Signs List]

- 10: Decorative sheet
- 11: Transparent recycled resin layer
- 12: Pattern layer
- 13: Colored recycled resin layer
- 14: Adhesive layer

## Claims

1. A decorative sheet, comprising:
a transparent recycled resin layer containing a recycled polyester resin;
a pattern layer having an arbitrary pattern; and
a colored recycled resin layer containing a recycled polyester resin and colored in an arbitrary color tone,
wherein the decorative sheet is formed by sequentially superimposing the transparent recycled resin layer, the pattern layer, and the colored recycled resin layer,
wherein the transparent recycled resin layer has a haze value equal to or less than 4% as a degree of cloudiness, an L* value equal to or more than 98.5, and a b* value equal to or less than 1.8 in CIE 1976 Lab that are measured using a color measuring plate L*: 99.17, a*: -0.09, b*: 0.53 as a background, and
wherein the pattern layer has an L* value equal to or more than 95.0 and less than 97.0, and a b* value equal to or more than 3.0 in the CIE 1976 Lab, or the pattern layer has an L* value less than 95.0 in the CIE 1976 Lab.

2. The decorative sheet according to claim 1, wherein a difference between the L* value of the transparent recycled resin layer and the L* value of the pattern layer is equal to or more than 2.0.

3. The decorative sheet according to claim 1 or 2, wherein an adhesive layer is formed between the transparent recycled resin layer and the pattern layer, or between the pattern layer and the colored recycled resin layer.

4. The decorative sheet according to any one of claims 1 to 3, wherein the recycled polyester resin contains a raw material generated from a PET bottle.

5. The decorative sheet according to any one of claims 1 to 4, wherein the transparent recycled resin layer includes the recycled polyester resin in a range equal to or more than 50% by mass and equal to or less than 95% by mass.

6. The decorative sheet according to any one of claims 1 to 5, wherein the recycled polyester resin included in the entire decorative sheet is equal to or more than 50% by mass.

## Patentansprüche

1. Ein dekoratives flächenförmiges Produkt, umfassend:
eine transparente, recycelte Harzschicht, enthaltend ein recyceltes Polyesterharz;
eine Musterschicht mit einem beliebigen Muster; und
eine farbige, recycelte Harzschicht, enthaltend ein recyceltes Polyesterharz, und gefärbt in einem beliebigen Farbton,
wobei das dekorative flächenförmige Produkt gebildet ist durch aufeinanderfolgendes übereinander Anordnen der transparenten, recycelten Harzschicht, der Musterschicht und der farbigen, recycelten Harzschicht,
wobei die transparente, recycelte Harzschicht einen Trübungswert gleich oder kleiner als 4 %, als ein Grad der Eintrübung, einen L*-Wert gleich oder größer als 98,5 und einen b*-Wert gleich oder kleiner als 1,8 im CIE 1976 Lab-Farbraum aufweist, die unter Verwendung einer Farbmessplatte L*: 99,17, a*: -0,09, b*: 0,53 als ein Hintergrund gemessen werden, und
wobei die Musterschicht einen L*-Wert gleich oder größer als 95,0 und kleiner als 97,0 und einen b*-Wert gleich oder größer als 3,0 im CIE 1976 Lab-Farbraum aufweist, oder die Musterschicht einen L*-Wert kleiner als 95,0 im CIE 1976 Lab-Farbraum aufweist.

2. Das flächenförmige Produkt gemäß Anspruch 1, wobei eine Differenz zwischen dem L*-Wert der transparenten, recycelten Harzschicht und dem L*-Wert der Musterschicht gleich oder größer als 2,0 ist.

3. Das flächenförmige Produkt gemäß Anspruch 1 oder 2, wobei eine Klebeschicht gebildet ist zwischen der transparenten, recycelten Harzschicht und der Musterschicht oder zwischen der Musterschicht und der farbigen, recycelten Harzschicht.

4. Das flächenförmige Produkt gemäß einem der Ansprüche 1 bis 3, wobei das recycelte Polyesterharz ein Ausgangsmaterial, erzeugt aus einer PET-Flasche, enthält.

5. Das flächenförmige Produkt gemäß einem der Ansprüche 1 bis 4, wobei die transparente, recycelte Harzschicht das recycelte Polyesterharz in einem Bereich gleich oder größer als 50 Massen-% und gleich oder kleiner als 95 Massen-% beinhaltet.

6. Das flächenförmige Produkt gemäß einem der Ansprüche 1 bis 5, wobei das recycelte Polyesterharz, das in der gesamten flächenförmigen Produkt enthalten ist, gleich oder größer als 50 Massen-% ist.

## Revendications

1. Feuille décorative, comprenant :
une couche de résine recyclée transparente contenant une résine de polyester recyclée ;
une couche de dessin présentant un dessin donné ; et
une couche de résine recyclée colorée contenant une résine de polyester recyclée et colorée dans une tonalité de couleur donnée,
dans laquelle la feuille décorative est formée par superposition séquentielle de la couche de résine recyclée transparente, de la couche de dessin, et de la couche de résine recyclée colorée,
dans laquelle la couche de résine recyclée transparente présente une valeur de trouble égale ou inférieure à 4 % selon un degré de turbidité, une valeur L* égale ou supérieure à 98,5, et une valeur b* égale ou inférieure à 1,8 selon le tableau colorimétrique de la CIE 1976 Lab qui sont mesurées au moyen d'une plaque de mesure de couleur L* : 99,17, a* : -0,09, b* : 0,53 en tant que contexte, et
dans laquelle la couche de dessin présente une valeur L* égale ou supérieure à 95,0 et inférieure à 97,0, et une valeur b* égale ou supérieure à 3,0 dans la CIE 1976 Lab, ou la couche de dessin présente une valeur L* inférieure à 95,0 dans la CIE 1976 Lab.

2. Feuille décorative selon la revendication 1, dans laquelle une différence entre la valeur L* de la couche de résine recyclée transparente et la valeur L* de la couche de dessin est égale ou supérieure à 2,0.

3. Feuille décorative selon la revendication 1 ou 2, dans laquelle une couche adhésive est formée entre la couche de résine recyclée transparente et la couche de dessin, ou entre la couche de dessin et la couche de résine recyclée colorée.

4. Feuille décorative selon l'une quelconque des revendications 1 à 3, dans laquelle la résine de polyester recyclée contient un matériau brut généré à partir d'une bouteille en PET.

5. Feuille décorative selon l'une quelconque des revendications 1 à 4, dans laquelle la couche de résine recyclée transparente inclut la résine de polyester recyclée dans une plage égale ou supérieure à 50 % en masse et égale ou inférieure à 95 % en masse.

6. Feuille décorative selon l'une quelconque des revendications 1 à 5, dans laquelle la résine de polyester recyclée incluse dans la feuille décorative entière est égale ou supérieure à 50 % en masse.
